(19) Europäisches Patentamt
European Patent Office
Office européen des brevets

(11) **EP 3 308 378 B1**

(12) **EUROPEAN PATENT SPECIFICATION**

(45) Date of publication and mention of the grant of the patent:
**11.09.2019 Bulletin 2019/37**

(21) Application number: **15895109.5**

(22) Date of filing: **11.06.2015**

(51) Int Cl.:
***G10L 13/02*** *(2013.01)*

(86) International application number:
**PCT/US2015/035342**

(87) International publication number:
**WO 2016/200391 (15.12.2016 Gazette 2016/50)**

(54) **SYSTEM AND METHOD FOR OUTLIER IDENTIFICATION TO REMOVE POOR ALIGNMENTS IN SPEECH SYNTHESIS**

SYSTEM UND VERFAHREN ZUR AUSREISSERERKENNUNG ZUR BESEITIGUNG VON SCHLECHTEN AUSRICHTUNGEN IN DER SPRACHSYNTHESE

SYSTÈME ET PROCÉDÉ D'IDENTIFICATION DE POINT ABERRANT POUR ÉLIMINER LES DÉFAUTS D'ALIGNEMENT DANS LA SYNTHÈSE VOCALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.04.2018 Bulletin 2018/16**

(73) Proprietor: **Interactive Intelligence Group, Inc. Indianapolis, IN 46278 (US)**

(72) Inventors:
• **RAGHAVENDRA, E. Veera**
  **Indianapolis, Indiana 46278 (US)**
• **GANAPATHIRAJU, Aravind**
  **Indianapolis, Indiana 46278 (US)**

(74) Representative: **Gevers Patents**
**Intellectual Property House**
**Holidaystraat 5**
**1831 Diegem (BE)**

(56) References cited:
**US-A1- 2003 125 949    US-A1- 2010 312 562**
**US-A1- 2013 262 096**

• **NORBERT BRAUNSCHWEILER ET AL: "Automatic sentence selection from speech corpora including diverse speech for improved HMM-TTS synthesis quality", PROCEEDINGS OF INTERSPEECH 2011, 27 August 2011 (2011-08-27), pages 1821-1824, XP055469402, DOI: 10.1109/SpeD.2013.6682670**
• **JINDRICH MATOUSEK ET AL: "Building of a speech corpus optimised for unit selection TTS synthesis", PROCEEDINGSOF LREC 2008, 28 May 2008 (2008-05-28), XP055472390,**
• **T. NAGARAJAN ET AL: "Subband-Based Group Delay Segmentation of Spontaneous Speech into Syllable-Like Units", EURASIP JOURNAL ON ADVANCES IN SIGNAL PROCESSING, vol. 2004, no. 17, 1 December 2004 (2004-12-01), pages 2614-2625, XP055472492, DOI: 10.1155/S1110865704406210**

## Description

### BACKGROUND

The present invention generally relates to speech synthesis systems and methods, as well as telecommunications systems and methods. More particularly, the present invention pertains to text-to-speech systems.

Document NORBERT BRAUNSCHWEILER ET AL - "Sentence selection for training TTS systems; discards sentences with fundamental frequency errors and low word accuracy" discloses sentence selection for training TTS systems. The system discards sentences with fundamental frequency errors and low word accuracy.

### SUMMARY

A system and method are presented for outlier identification to remove poor alignments in speech synthesis. The quality of the output of a text-to-speech system directly depends on the accuracy of alignments of a speech utterance. The identification of mis-alignments and mis-pronunciations from automated alignments may be made based on fundamental frequency methods and group delay based outlier methods. The identification of these outliers allows for their removal, which improves the synthesis quality of the text-to-speech system.

The invention is defined in the appended claims. All occurrences of the word "embodiment(s)", except the ones related to the claims, refer to examples useful for understanding the invention which were originally filed but which do not represent embodiments of the presently claimed invention. These examples are shown for illustrative purposes only.

### BRIEF DESCRIPTION OF THE DRAWINGS

Figure 1a is a diagram illustrating an embodiment of a mis-alignment.
Figure 1b is a diagram illustrating an embodiment of a mis-alignment.
Figure 1c is a diagram illustrating an embodiment of a mis-pronunciation.
Figure 2a is a diagram illustrating an embodiment of an average F0 and duration plot.
Figure 2b is a diagram illustrating an embodiment of an average F0 and duration plot.
Figure 2c is a diagram illustrating an embodiment of an average F0 and duration plot.
Figure 2d is a diagram illustrating an embodiment of an average F0 and duration plot.
Figure 3 is a diagram illustrating an embodiment of an HMM based TTS system.
Figure 4 is a flowchart illustrating a process of an embodiment for the detection of F0 based outliers.
Figure 5 is a diagram illustrating an embodiment of phoneme boundaries.
Figure 6 is a flowchart illustrating a process of an embodiment for the detection of group delay based outliers.

### DETAILED DESCRIPTION

For the purposes of promoting an understanding of the principles of the invention, reference will now be made to the embodiment illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

With the availability of higher processing memories and storage capabilities, demand for speech applications is also increasing for mobile phones and handheld devices. Requests for speech interfaces are also increasing in commercial applications. The development of speech interfaces for applications is generally focused on text-to-speech synthesis and, in particular, the usage of Hidden Markov Models (HMMs) based approaches, such as statistical parametric speech synthesis.

HMM based approaches have shown that it is possible to produce natural-sounding synthesized speech. This is highly desirable as the synthesized speech sounds less robotic and more human. In a statistical parametric approach, metrics, such as duration, fundamental frequency (F0), and Mel-cepstral coefficients (MCEPs), are extracted from the speech signal and modelled. During synthesis, trained models are then used to generate sequences of parameters from sentence HMMs.

Creating the models for duration, F0 and MCEPs depend on the alignments of the audio to the phonemes. Highly accurate alignments will produce greater synthesis quality, while poor alignments decrease the quality of synthesized speech. The alignments generated by the system are used to produce context labels, but problems arise if a mismatch occurs. The generated alignments may have mis-alignments due to mismatch between audio and transcription and speaker variability. Wrong alignments cause bad prosody and ad-hoc frequency or spectral variations, thus significantly decreasing the quality of the speech synthesis.

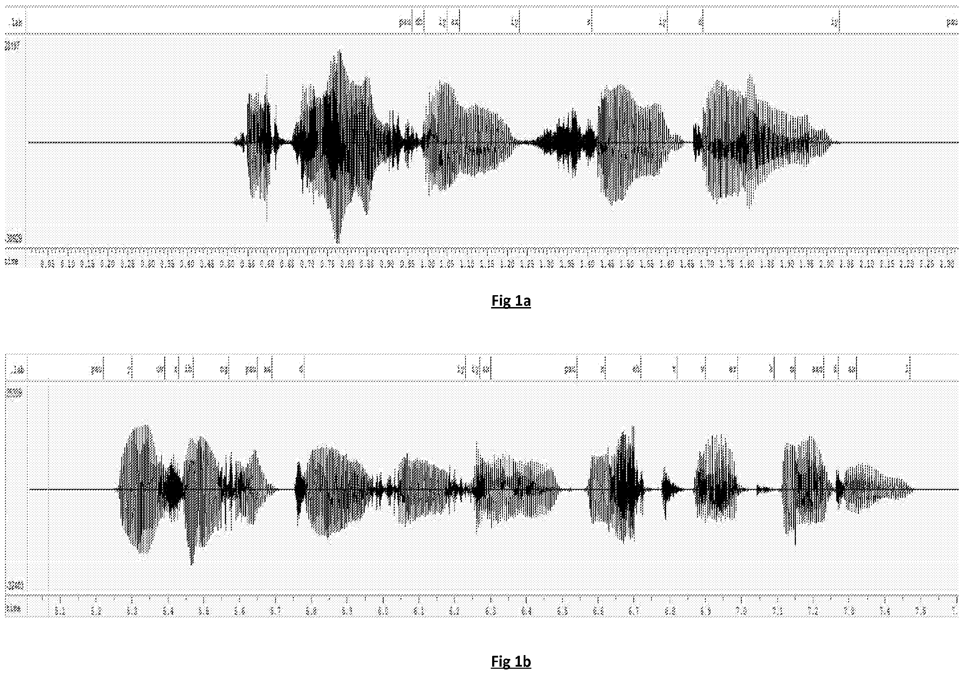

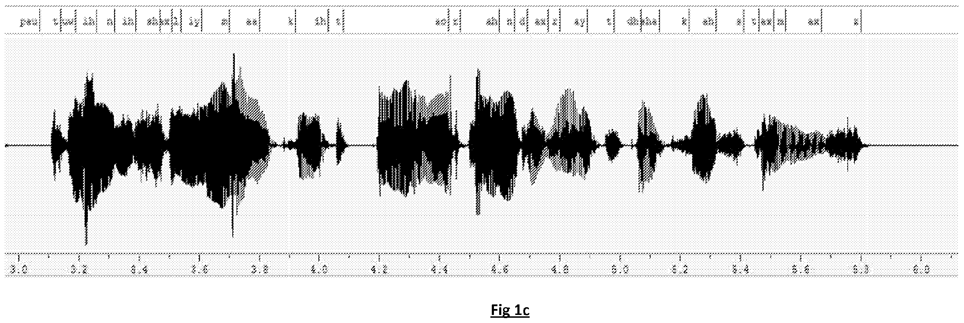

Figures 1a-1c illustrate general examples of mis-pronunciation and mis-alignments and the effects on speech synthesis. In one example, Figure 1(a) illustrates that all the phonemes have been moved further in time and the word "the" has been pronounced as [dh] [ax]. Actual pronunciations show [dh] [iy]. In another example, Figure 1(b) illustrates the mis-alignment of the phoneme [iy]. In yet another example, Figure 1(c) illustrates an instance of the speaker pronouncing the word "or" as [ow]. These examples of mis-alignments and mis-pronunciations produce the wrong models, which results in the models predicting wrongly during synthesis. In order to circumvent these issues, systems and methods for outlier identification are presented to remove poor alignments in text-to-speech systems.

Fundamental Frequency Based Outlier Detection

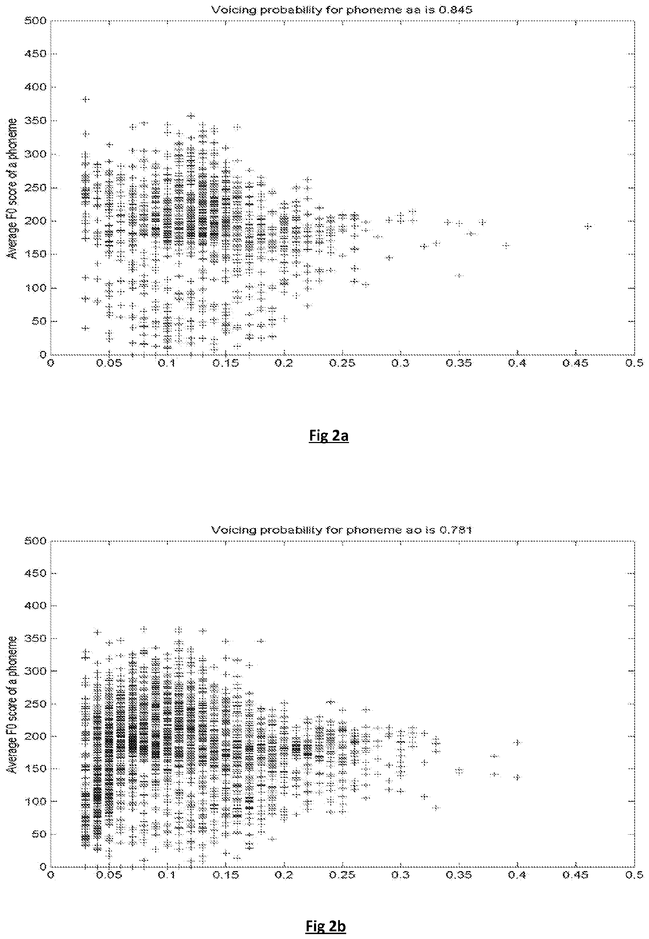

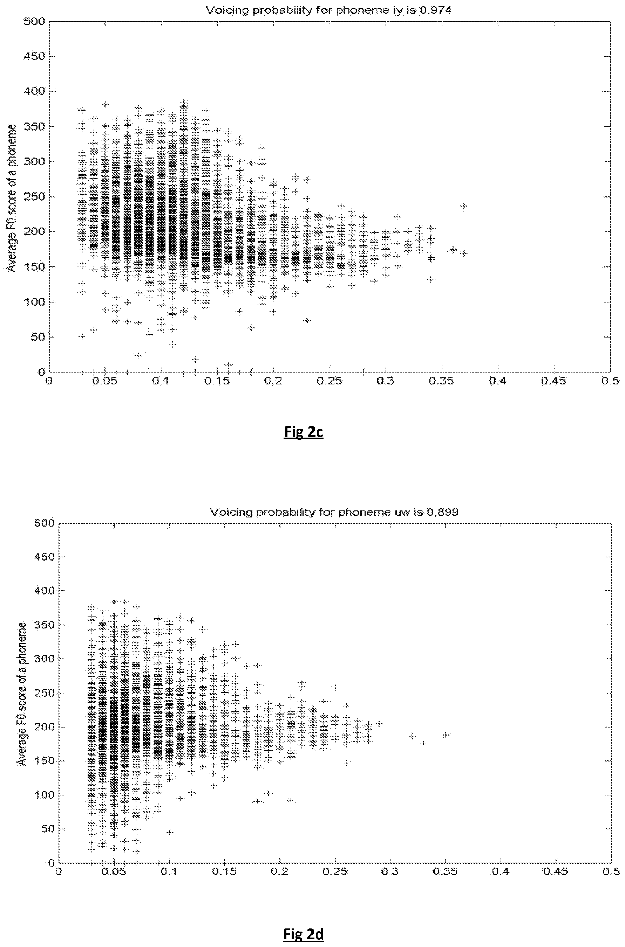

Fundamental frequency (F0) may be used to determine the frequency of voice sounds from a person. F0 also indicates the frequency of the vibration of the vocal folds. In a general example, an adult female speaker tends to have a F0 ranging from 165 Hz to 225 Hz. Values for F0 outside of this range for a female speaker may be indicative of outliers. Using the general example of the adult female speaker, Figures 2a-2d display average F0 and duration plots for long-vowels that indicate mis-alignment and/or mis-pronunciation. In these figures, duration is indicated on the horizontal axis while the average F0 score of phoneme is indicated on the vertical axis of the plots. Figure 2a illustrates the long-vowel [aa], Figure 2b illustrates [ao], Figure 2c illustrates [iy], and Figure 2d illustrates [uw]. Many instances have an average F0 value below 165, as seen in each of Figures 2a-2d. The occurrence of an F0 value below 165 Hz may be caused by the transition from vowel to an unvoiced consonant or vice versa. In some instances, the duration of the phoneme is beyond 250 ms, which can also be seen in each of Figures 2a-2d.

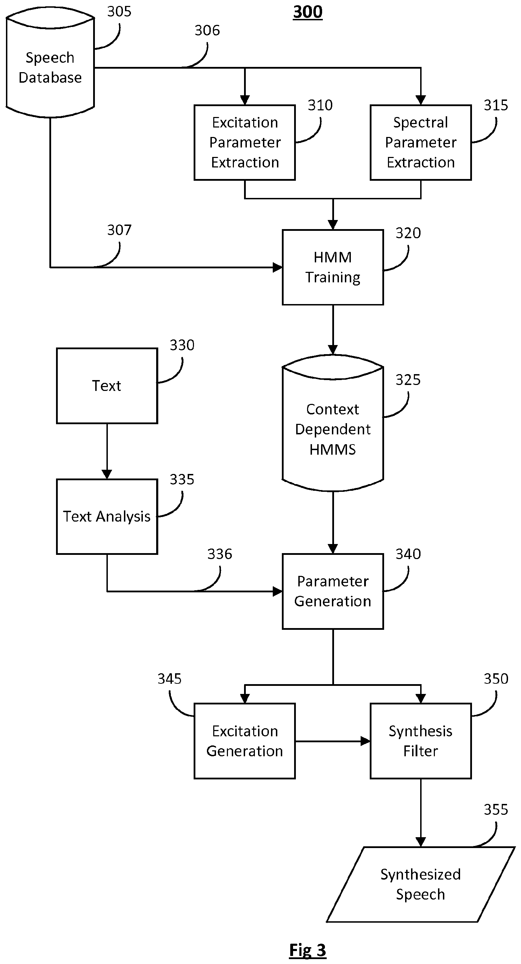

Figure 3 is a diagram illustrating an embodiment of a Hidden Markov Model (HMM) based Text to Speech (TTS) system, indicated generally at 300. An embodiment of an exemplary system may contain two phases, for example, the training phase and the synthesis phase.

The Speech Database 305 may contain an amount of speech data for use in speech synthesis. During the training phase, a speech signal 306 is converted into parameters. The parameters may be comprised of excitation parameters and spectral parameters. Excitation Parameter Extraction 310 and Spectral Parameter Extraction 315 occur from the speech signal 306 which travels from the Speech Database 305. A Hidden Markov Model 320 may be trained using these extracted parameters and the Labels 307 from the Speech Database 305. Any number of HMM models may result from the training and these context dependent HMMs are stored in a database 325.

The synthesis phase begins as the context dependent HMMs 325 are used to generate parameters 340. The parameter generation 340 may utilize input from a corpus of text 330 from which speech is to be synthesized from. The text 330 may undergo analysis 335 and the extracted labels 336 are used in the generation of parameters 340. In one embodiment, excitation and spectral parameters may be generated in 340.

The excitation parameters may be used to generate the excitation signal 345, which is input, along with the spectral parameters, into a synthesis filter 350. Filter parameters are generally Mel frequency cepstral coefficients (MFCC) and are often modeled by a statistical time series by using HMMs. The predicted values of the filter and the fundamental frequency as time series values may be used to synthesize the filter by creating an excitation signal from the fundamental frequency values and the MFCC values used to form the filter.

Synthesized speech 355 is produced when the excitation signal passes through the filter. The formation of the excitation signal 345 is integral to the quality of the output, or synthesized, speech 355.

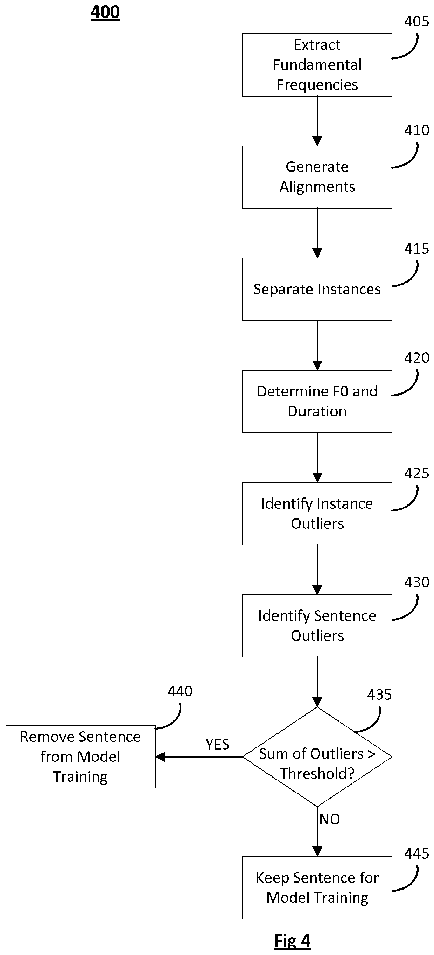

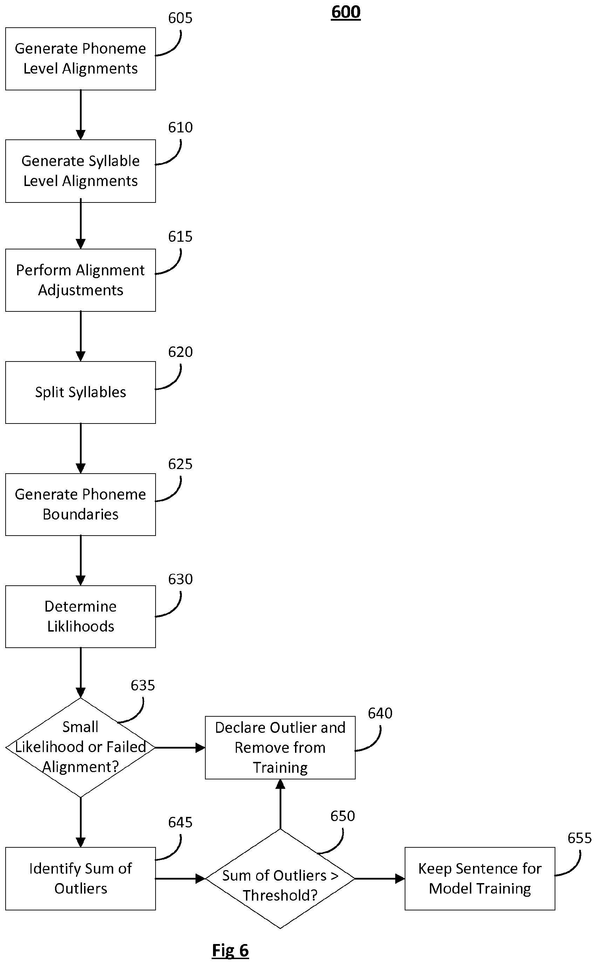

In an embodiment, outlier detection occurs prior to the training of the HMM 320 during the training phase. The data in the speech database is optimized with the detection of outliers within the database and thus, the training of the HMM 320 results in greater accuracy. Figures 4 and 6 describe embodiments in greater detail for the process of detecting the outliers, specifically, the detection of fundamental frequency based outliers and the detection of group delay based outliers, respectively.

Figure 4 is a flowchart illustrating a process of an embodiment for detection of fundamental frequency based outliers, indicated generally at 400.

In operation 405, fundamental frequencies are extracted. For example, a pitch tracking tool (e.g., ESPS) may be used to perform signal analysis. Control is passed to operation 410 and process 400 continues.

In operation 410, alignments are generated. For example, a speech recognition system (e.g., HTK) may be used to perform the process of alignment generation. Control is passed to operation 415 and process 400 continues.

In operation 415, instances are separated. For example, instances of phonemes are separated out. An instance may describe an occurrence of a phoneme within the audio file. Control is passed to operation 420 and process 400 continues.

In operation 420, fundamental frequency and duration are determined. For example, an average fundamental frequency value and an average duration value may be determined for each separated instance. Control is passed to operation 425 and process 400 continues.

In operation 425, outliers are identified for instances. For example, in order to identify outliers, criteria must be met. Several non-limiting examples of criteria may include: phonemes presenting as vowels, the average F0 of an instance being less than a predetermined value, the duration of the instance presenting at greater than twice the average duration of a phoneme, and the duration of the instance presenting at less than half of the average duration of a phoneme. A predetermined value may be empirically chosen so that spurious F0 estimates that arise because of poor alignment can be identified. In one example, a predetermined value of 40 is used, where 40 represents an empirically chosen value for a specific instance. Control is passed to operation 430 and process 400 continues.

In operation 430, outliers are identified for sentences. For example, the total number of outliers of the instances within a sentence is determined. Control is passed to operation 435 and process 400 continues.

In operation 435, it is determined whether the sum of outliers meets the threshold. If it is determined that the sum of outliers is meets a threshold, control is passed to operation 440 and process 400 continues. If it is determined that the sum of outliers does not meet the threshold, control is passed to operation 445 and process 400 continues.

The determination in operation 435 may be made based on any suitable criteria. For example, the threshold for the number of outliers may be an empirically chosen value that provides a balance of discarded recordings versus retaining too many recordings with poor alignments. In one example, the threshold may represent five outliers and if the total number of outliers determined in operation 430 meets the threshold, the sentence will be removed from model training.

In operation 440, the sentence is removed from model training and the process 400 ends.

In operation 445, the sentence is retained for model training and the process 400 ends.

Group Delay Based Outlier Detection

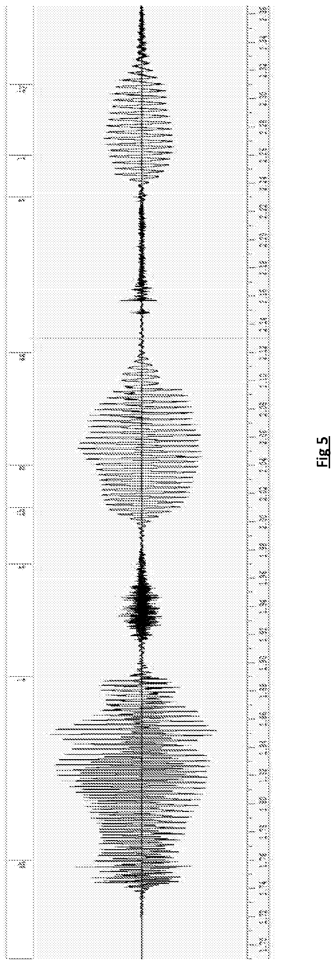

The group delay approach aids in segmentation of the continuous speech into syllable boundaries using peaks and valleys in the group delay domain. Phoneme boundaries can be aligned with group-delay based syllables using an audio alignment tool (e.g. HVite). If the likelihood of the phoneme is very low, or it could not align with a larger beam width, then that phoneme may be considered an outlier. Figure 5 is an example illustration of the phoneme boundaries for the word "ultimately". The speaker has pronounced the word as "automately", however. When the phonemes [ah], [1] aligned with syllable [al-1], the likelihood of the phoneme [1] becomes very low and results in a failure to adjust the boundary.

Figure 6 is a flowchart illustrating a process of an embodiment for detection of group delay based outliers, indicated generally at 600.

In operation 605, phoneme level alignments are generated. For example, a speech recognition system (e.g., HTK) may be used to perform the process of alignment generation. Control is passed to operation 610 and process 600 continues.

In operation 610, syllable level alignments are generated using group delay. For example, a speech recognition system (e.g. HTK) may be used to perform the process of alignment generation along with a phoneme model. The phoneme model may comprise a previously trained acoustic model using training date. Control is passed to operation 615 and process 600 continues.

In operation 615, alignment adjustments are performed. For example, group delay algorithms may be used to perform the adjustments of the syllable alignments. Control is passed to operation 620 and process 600 continues.

In operation 620, syllables are split. For example, syllables may be split into separate audio files. These separate files may be used for further analysis such as pooling information from other like syllables. Control is passed to operation 625 and process 600 continues.

In operation 625, phoneme boundaries are generated. For example, phoneme boundaries may be generated for each audio file generated in operation 620 using the existing phoneme model, wherein the existing phoneme model comprises a previously trained acoustic model using training data. Control is passed to operation 620 and process 600 continues.

In operation 630, likelihood values are determined. For example, likelihood values are determined for each generated phoneme. The likelihood may comprise a log-likelihood value. Control is passed to operation 635 and process 600 continues.

In operation 635, it is determined whether or not the alignment has failed or the value of the likelihood is small. If it is determined that the alignment has failed or the value of the likelihood is small, control is passed to operation 640 and the process 600 continues. If it is determined that the alignment has not failed or the value of the likelihood is not small, control is passed to operation 645 and the process 600 continues.

The determination in operation 635 may be made on any suitable criteria. For example, this may be very tool specific and is chosen empirically.

In operation 640, an outlier is declared and the sentence is removed from training and the process ends.

In operation 645, the sum of outliers is identified. For example, the sum of the outliers from the sentence is determined. Control is passed to operation 650 and the process 600 continues.

In operation 650, it is determined if the sum of outliers meets a threshold. If it is determined that the sum of outliers does not meet the threshold, control is passed to operation 650 and the process 600 continues. If it is determined that the sum of outliers meets the threshold, control is passed back to operation 640 and the process 600 continues.

The determination in operation 650 may be made based on any suitable criteria. For example, the threshold may be an empirically chose value to provide a balance of retained versus discarded recordings. In an embodiment, the threshold value is three. Thus, if the sentence is determined to have more than three outliers, the sentence will not be used for model training.

In operation 655, the sentence is retained for model training and the process 600 ends.

Use of Outlier Detection in Speech Synthesis

The previously described embodiments of outlier detection may be applied in an HMM-based speech synthesis system as described in Figure 4. During the HMM model training phase, spectrum and excitation parameters are extracted from a speech database and modeled by context dependent HMMs. During the synthesis phase, context dependent HMMs are concatenated according to the text to be synthesized.

HMM models are trained using HMM-based speech synthesis system (HTS) framework. HTS is a modified version of a Hidden Markov Model toolkit and a signal processing tool such as the Signal Processing Tool Kit (SPTK). During training, spectrum and excitation parameters are extracted from the annotated speech database and converted into a sequence of observed feature vectors which are modeled by a corresponding sequence of HMMs. Each HMM corresponds to a left-to-right no-skip model, where each output vector is composed of two streams: spectrum and excitation. The spectrum stream is represented by mel-cepstral coefficients, including energy coefficients and the related delta and delta-delta coefficients. The excitation stream is represented by Log F0 and the related delta and delta-delta coefficients.

HMMs have state duration densities to model the temporal structure of speech. As a result, HTS models utilize not only spectrum parameters, but also F0 and duration in a unified framework of HMM. Mel-ceptral coefficients are modeled by continuous HMMs and F0s are modeled by multi-space probability distribution HMM (MSD-HMM).

In order to capture the phonetic and prosody co-articulation phenomena, context-dependent phone models may be used. State tying based on decision-tree and minimum description length criterion is applied to overcome the problem of data sparseness in training. Stream-dependent models are the built to cluster the spectral, prosodic, and duration features into separated decision trees.

During synthesis, an arbitrarily given text to be synthesized is converted to a context-based label sequence. According to the label sequence, a sentence HMM is constructed by concatenating context dependent HMMs. State durations of the sentence HMM are determined so as to maximize the output probability of state durations. A sequence of mel-cepstral coefficients and log F0 values, including voiced/unvoiced decisions, is determined so that the output probability for the HMM is maximized using a speech parameter generation algorithm.

The main feature of the system is the use of dynamic feature: by inclusion of dynamic coefficients in the feature vector. The speech parameter sequence generated in synthesis is constrained to be realistic, as defined by the statistical parameters of the HMMs. Speech waveform is synthesized directly from the generated mel-cepstral coefficients and F0 values, wherein the synthesis utilizes a MLSA filter.

Mel-cepstral distortion (MCD) may be used to evaluate the speech synthesis. MCD is an objective error measure used to compute cepstral distortion between original and synthesized MCEPs and F0 values. A lower MCD value indicates high quality synthesized speech. The MCD may be defined as a Euclidean Distance measure, using the following mathematical equation:

$$mcd = (10/\ln 10) * \sqrt{2 * \sum_{i=1}^{41}(mc_i^t - mc_i^e)^2}$$

Where $mc_i^t$ and $mc_i^e$ denote the target and estimated F0 and MCEPs, respectively.

Hence, the proper scope of the present invention should be determined only by the broadest interpretation of the appended claims so as to encompass all such modifications as well as all relationships equivalent to those illustrated in the drawings and described in the specification.

**Claims**

1. A method for synthesizing speech in a text-to-speech system, wherein the system comprises at least a speech database, a database capable of storing Hidden Markov Models, and a synthesis filter, the method comprising the steps of:

   1a. identifying outlying results in audio files from the speech database (305) and removing the outlying results before model training;
   1b. converting a speech signal from the speech database into parameters and extracting the parameters from the speech signal;
   1c. training Hidden Markov Models using the extracted parameters from the speech signal and using the labels from the speech database to produce context dependent Hidden Markov Models;
   1d. storing the context dependent Hidden Markov Models (325) in the database capable of storing Hidden Markov Models;
   1e. inputting text and analyzing the text, wherein said analyzing comprises extracting labels from the text;
   1f. utilizing said labels to generate parameters from the context dependent Hidden Markov Models;
   1g. generating an other signal from the parameters;
   1h. inputting the other signal and the parameters into the synthesis filter; and
   1i. producing synthesized speech (355) as the other signal passes through the synthesis filter;

   **characterised in that** the identifying of outlying results, applying fundamental frequency, in audio files comprises the steps of:

2a. extracting values of the fundamental frequencies (405) from the audio files;
2b. generating alignments using the extracted values from the audio files;
2c. separating out instances of phonemes;
2d. determining, for each separated instance, an average fundamental frequency value and an average duration value;
2e. identifying an instance as an outlier, wherein an outlier is identified if:

i. the phoneme is a vowel;
ii. the average fundamental frequency of an instance is less than a predetermined value;
iii. the duration of the instance is greater than twice the average duration of a phoneme; and
iv. the duration of the instance is less than half of the average duration of a phoneme;

2f. wherein identifying a sum of outliers for each sentence in the audio files, wherein if the sentence has more than a number of outliers, discarding the sentence in the audio files from model training;

and **in that** the identifying of outlying results, applying group delay algorithms, in audio files comprises the steps of:

3a. generating alignments of the audio files at a phoneme level (605);
3b. generating alignments of the audio files at a syllable level (610);
3c. adjusting the alignments at the syllable level using group delay algorithms;
3d. separating each syllable from the audio files into a separate audio file;
3e. generating, for each separate audio file, phonemes of the separate audio files using phoneme boundaries for each syllable and an existing phoneme model;
3f. determining a likelihood value of each generated phoneme, wherein if the likelihood value meets a criteria, identifying the generated phoneme as an outlier; and
3g. identifying a sum of outliers for each sentence in the audio files, wherein if the sentence has more than a number of outliers, discarding the sentence from model training (650).

2. The method of claim 1, wherein the parameters of step (1b) comprise one or more of excitation and spectral.

3. The method of claim 1, wherein the parameters of step (1f) comprise one or more of excitation and spectral.

4. The method of claim 1, wherein the extracting is performed using a pitch tracking tool.

5. The method of claim 1, wherein the generating is performed using a speech recognition system.

6. The method of claim 1, wherein the alignments are generated at a phoneme level.

7. The method of claim 1, wherein the predetermined value is empirically chosen.

8. The method of claim 7, wherein the predetermined value is 40.

9. The method of claim 1, wherein the number of outliers of step (2f) is empirically chosen.

10. The method of claim 9, wherein the number of outliers is five.

11. The method of claim 1, wherein the generating of step (3a) is performed using a speech recognition system.

12. The method of claim 1, wherein the generating of step (3b) is performed using at least one of: a speech recognition system and a phoneme model.

13. The method of claim 1, wherein the criteria comprises a small value.

14. The method of claim 1, wherein the criteria comprises a failed alignment.

15. The method of claim 1, wherein the number of outliers of step (3g) comprises three.

**Patentansprüche**

1. Verfahren zum Synthetisieren von Sprache in einem Text-zu-Sprache-System, wobei das System mindestens eine Sprachdatenbank, eine Datenbank, die fähig ist, Hidden-Markov-Models zu speichern, und ein Synthesefilter umfasst, wobei das Verfahren die folgenden Schritte umfasst:

1a. Identifizieren von Ausreißerresultaten in Audiodateien aus der Sprachdatenbank (305) und Entfernen der Ausreißerresultate vor dem Modelltraining;
1b. Umwandeln eines Sprachsignals aus einer Sprachdatenbank in Parameter und Extrahieren der Parameter aus dem Sprachsignal;

1c. Trainieren von Hidden-Markov-Models unter Verwenden der extrahierten Parameter aus dem Sprachsignal und Verwenden der Labels aus der Sprachdatenbank, um kontextabhängige Hidden-Markov-Models zu erzeugen;

1d. Speichern der kontextabhängigen Hidden-Markov-Models (325) in der Datenbank, die fähig ist, Hidden-Markov-Models zu speichern;

1e. Eingeben von Text und Analysieren des Texts, wobei das Analysieren das Extrahieren von Labels aus dem Text umfasst;

1f. Verwenden der Labels, um Parameter aus den kontextabhängigen Hidden-Markov-Models zu generieren;

1g. Generieren eines anderen Signals aus den Parametern;

1h. Eingeben des anderen Signals und der Parameter in das Synthesefilter; und

1i. Erzeugen synthetisierter Sprache (355), während das andere Signal durch das Synthesefilter hindurchgeht;

**dadurch gekennzeichnet, dass** das Identifizieren von Ausreißerresultaten das Anwenden einer Grundfrequenz in Audiodateien die folgenden Schritte umfasst:

2a. Extrahieren von Werten aus den Grundfrequenzen (405) aus den Audiodateien;

2b. Generieren von Ausrichtungen unter Verwenden der extrahierten Werte aus den Audiodateien;

2c. Heraustrennen von Instanzen von Phonemen;

2d. Bestimmen für jede separate Instanz eines mittleren Grundfrequenzwerts und eines mittleren Dauerwerts;

2e. Identifizieren einer Instanz als einen Ausreißer, wobei ein Ausreißer identifiziert wird, falls:

i. das Phonem ein Vokal ist;

ii. die mittlere Grundfrequenz einer Instanz kleiner ist als ein vorbestimmter Wert;

iii. die Dauer der Instanz größer ist als zwei Mal die mittlere Dauer eines Phonems; und

iv. die Dauer der Instanz kleiner ist als die Hälfte der mittleren Dauer eines Phonems;

2f. Identifizieren einer Summe von Ausreißern für jeden Satz in den Audiodateien, wobei, falls der Satz mehr als eine Anzahl von Ausreißern aufweist, der Satz in den Audiodateien aus dem Modelltraining verworfen wird;

und dadurch, dass das Identifizieren der Ausreißerresultate, das Anwenden von Gruppenverzögerungsalgorithmen in Audiodateien die folgenden Schritte umfasst:

3a. Generieren von Ausrichtungen der Audiodateien an einem Phonempegel (605);

3b. Generieren von Ausrichtungen der Audiodateien an einem Silbenpegel (610);

3c. Einstellen der Ausrichtungen an dem Silbenpegel unter Verwenden von Gruppenverzögerungsalgorithmen;

3d. Trennen jeder Silbe aus den Audiodateien in eine separate Audiodatei;

3e. Generieren für jede separate Audiodatei von Phonemen der separaten Audiodateien unter Verwenden von Phonemgrenzen für jede Silbe und eines existierenden Phonemmodells;

3f. Bestimmen eines Wahrscheinlichkeitswerts jedes erzeugten Phonems, wobei, falls der Wahrscheinlichkeitswert einem Kriterium entspricht, das erzeugte Phonem als ein Ausreißer identifiziert wird; und

3g. Identifizieren einer Summe von Ausreißern für jeden Satz in den Audiodateien, wobei, falls der Satz mehr als eine Anzahl von Ausreißern aufweist, der Satz aus dem Modelltraining verworfen wird (650).

2. Verfahren nach Anspruch 1, wobei die Parameter von Schritt (1b) einen oder mehrere von Anregung und Spektral umfassen.

3. Verfahren nach Anspruch 1, wobei die Parameter von Schritt (1f) einen oder mehrere von Anregung und Spektral umfassen.

4. Verfahren nach Anspruch 1, wobei das Extrahieren unter Verwenden eines Tonhöhenverfolgungswerkzeugs ausgeführt wird.

5. Verfahren nach Anspruch 1, wobei das Generieren unter Verwenden eines Spracherkennungssystems ausgeführt wird.

6. Verfahren nach Anspruch 1, wobei die Ausrichtungen an einem Phonempegel generiert werden.

7. Verfahren nach Anspruch 1, wobei der vorbestimmte Wert empirisch ausgewählt wird.

8. Verfahren nach Anspruch 7, wobei der vorbestimmte Wert 40 ist.

9. Verfahren nach Anspruch 1, wobei die Anzahl von Ausreißern von Schritt (2f) empirisch ausgewählt wird.

10. Verfahren nach Anspruch 9, wobei die Anzahl von Ausreißern fünf ist.

**11.** Verfahren nach Anspruch 1, wobei das Generieren von Schritt (3a) unter Verwenden eines Spracherkennungssystems ausgeführt wird.

**12.** Verfahren nach Anspruch 1, wobei das Generieren von Schritt (3b) unter Verwenden von mindestens einem ausgeführt wird: einem Spracherkennungssystem und einem Phonemmodell.

**13.** Verfahren nach Anspruch 1, wobei das Kriterium einen kleinen Wert umfasst.

**14.** Verfahren nach Anspruch 1, wobei das Kriterium eine gescheiterte Ausrichtung umfasst.

**15.** Verfahren nach Anspruch 1, wobei die Anzahl von Ausreißern von Schritt (3g) drei umfasst.

**Revendications**

**1.** Procédé de synthétisation de la voix dans un système de conversion de texte en parole, dans lequel le système comprend au moins une base de données vocale, une base de données capable de stocker des modèles de Markov cachés, et un filtre synthétique, le procédé comprenant les étapes de :

1.a. l'identification de résultats aberrants dans des fichiers audio depuis la base de données vocale (305) et du retrait des résultats aberrants avant la formation de modèle ;

1b. la conversion d'un signal vocal depuis la base de données vocale en paramètres et l'extraction des paramètres du signal vocal ;

1c. la formation de modèles de Markov cachés en utilisant les paramètres extraits du signal vocal et en utilisant les étiquettes de la base de données vocale pour produire des modèles de Markov cachés dépendant du contexte ;

1d. le stockage des modèles de Markov cachés dépendant du contexte (325) dans la base de données capable de stocker des modèles de Markov cachés ;

1e. l'entrée de texte et l'analyse du texte, dans lequel ladite analyse comprend l'extraction des étiquettes du texte ;

1f. l'utilisation desdites étiquettes pour générer à partir des paramètres des modèles de Markov cachés dépendant du contexte ;

1g. la génération d'un autre signal à partir des paramètres ;

1h. l'entrée de l'autre signal et des paramètres dans le filtre synthétique ; et

1i. la production de la voix synthétisée (355) lorsque l'autre signal passe au travers du filtre synthétique ;

caractérisé en ce que l'identification de résultats aberrants, en appliquant la fréquence fondamentale, dans des fichiers audio comprend les étapes de :

2a. l'extraction de valeurs des fréquences fondamentales (405) des fichiers audio ;
2b. la génération d'alignements en utilisant les valeurs extraites des fichiers audio ;
2c. la séparation d'occurrences de phonèmes ;
2d. la détermination, pour chaque occurrence séparée, d'une valeur de fréquence fondamentale moyenne et d'une valeur de durée moyenne ;
2e. l'identification d'une occurrence comme un point aberrant, dans lequel un point aberrant est identifié si :

i. le phonème est une voyelle ;
ii. la fréquence fondamentale moyenne d'une occurrence est inférieure à une valeur prédéterminée ;
iii. la durée de l'occurrence est supérieure à deux fois la durée moyenne d'un phonème ; et
iv. la durée de l'occurrence est inférieure à la moitié de la durée moyenne d'un phonème ;

2f. dans lequel l'identification d'une somme de points aberrants pour chaque phrase dans les fichiers audio, dans lequel si la phrase présente plus d'un nombre de point aberrants, le rejet de la phrase dans les fichiers audio de la formation de modèle ;

et en ce que l'identification de résultats aberrants, en appliquant des algorithmes de délai de groupe, dans des fichiers audio comprend les étapes de :

3a. la génération d'alignements des fichiers audio à un niveau de phonème (605) ;
3b. la génération d'alignements des fichiers audio à un niveau de syllabe (610) ;
3c. l'ajustement des alignements au niveau de syllabe en utilisant des algorithmes de délai de groupe ;
3d. la séparation de chaque syllabe des fichiers audio dans un fichier audio séparé ;
3e. la génération, pour chaque fichier audio séparé, de phonèmes des fichiers audio séparés en utilisant des limites de phonème pour chaque syllabe et un modèle de phonème existant ;
3f. la détermination d'une valeur de vraisemblance de chaque phonème généré, dans lequel si la valeur de vraisemblance satisfait à un critère, l'identification du phonème généré comme un point aberrant ; et
3g. l'identification d'une somme de points aberrants pour chaque phrase dans les fichiers audio, dans lequel si la phrase présente plus d'un nombre de points aberrants, le rejet de la phrase de la formation de modèle (650).

**2.** Procédé selon la revendication 1, dans lequel les paramètres de l'étape (1b) comprennent un ou plusieurs parmi excitation et spectral.

**3.** Procédé selon la revendication 1, dans lequel les paramètres de l'étape (1f) comprennent un ou plusieurs parmi excitation et spectral.

**4.** Procédé selon la revendication 1, dans lequel l'extraction est réalisée en utilisant un outil de suivi de pas.

**5.** Procédé selon la revendication 1, dans lequel la génération est réalisée en utilisant un système de reconnaissance vocale.

**6.** Procédé selon la revendication 1, dans lequel les alignements sont générés à un niveau de phonème.

**7.** Procédé selon la revendication 1, dans lequel la valeur prédéterminée est choisie empiriquement.

**8.** Procédé selon la revendication 7, dans lequel la valeur prédéterminée est de 40.

**9.** Procédé selon la revendication 1, dans lequel le nombre de points aberrants de l'étape (2f) est choisi empiriquement.

**10.** Procédé selon la revendication 9, dans lequel le nombre de points aberrants est de cinq.

**11.** Procédé selon la revendication 1, dans lequel la génération de l'étape (3a) est réalisée en utilisant un système de reconnaissance vocale.

**12.** Procédé selon la revendication 1, dans lequel la génération de l'étape (3b) est réalisée en utilisant au moins un de : un système de reconnaissance vocale et un modèle de phonème.

**13.** Procédé selon la revendication 1, dans lequel le critère comprend une petite valeur.

**14.** Procédé selon la revendication 1, dans lequel le critère comprend un mauvais alignement.

**15.** Procédé selon la revendication 1, dans lequel le nombre de points aberrants de l'étape (3g) est de trois.

Fig 1a

Fig 1b

Fig 1c

Voicing probability for phoneme aa is 0.845

**Fig 2a**

Voicing probability for phoneme ao is 0.781

**Fig 2b**

Voicing probability for phoneme iy is 0.974

**Fig 2c**

Voicing probability for phoneme uw is 0.899

**Fig 2d**

**Fig 3**

400

Extract
Fundamental
Frequencies — 405

Generate
Alignments — 410

Separate Instances — 415

Determine F0 and
Duration — 420

Identify Instance
Outliers — 425

Identify Sentence
Outliers — 430

440 — Remove Sentence
from Model
Training

YES

435 — Sum of Outliers >
Threshold?

NO

Keep Sentence for
Model Training — 445

**Fig 4**

Fig 5

**600**

605
Generate Phoneme
Level Alignments

610
Generate Syllable
Level Alignments

615
Perform Alignment
Adjustments

620
Split Syllables

625
Generate Phoneme
Boundaries

630
Determine
Liklihoods

635
Small
Likelihood or Failed
Alignment?

640
Declare Outlier and
Remove from
Training

645
Identify Sum of
Outliers

650
Sum of Outliers >
Threshold?

655
Keep Sentence for
Model Training

**Fig 6**

**EP 3 308 378 B1**

**REFERENCES CITED IN THE DESCRIPTION**

**Non-patent literature cited in the description**

- **NORBERT BRAUNSCHWEILER et al.** *Sentence selection for training TTS systems; discards sentences with fundamental frequency errors and low word accuracy*